# EUROPEAN PATENT APPLICATION

(11) **EP 4 704 317 A1**
(43) Date of publication of application: **04.03.2026**
(21) Application number: 25196368.2
(22) Date of filing: 18.08.2025
(51) Int. Cl.: H02M 1/00, H02M 1/08, H02M 3/157, H02M 3/158

(54) **MULTI-LEVEL BUCK CONVERTER**

(30) Priority: 29.08.2024 US 202418819860
(71) Applicant: Avago Technologies International Sales Pte. Limited, Singapore 768923 (SG)
(72) Inventor: Rutherford, Mark David, Wellington, CO 80549 (US); Baker, Michael, Fort Collins, CO 80528 (US); Kirchoefer, John Robert, Fort Collins, CO 80526 (US); McNitt, John, Fort Collins, CO 80528 (US)
(74) Representative: Grünecker Patent- und Rechtsanwälte PartG mbB

(57) **Abstract**

A switching regulator including a buck controller and control logic. The buck controller compares a reference output voltage with an output voltage to obtain a control voltage. The control logic outputs pulses to the switches. The pulses sequence the transitioning of the switches. The control logic inhibits one or more of the pulses from transitioning in response to a voltage difference existing between the control voltage and the reference output voltage.

## Description

### BACKGROUND

Electronic devices from different manufacturers can receive a transfer of power. In some instances, operational voltage regulation in these electronic devices can have a multitude of options based on application requirements.

### BRIEF DESCRIPTION OF DRAWINGS

The accompanying drawings, which are incorporated in and form a part of this specification, illustrate examples of the disclosure and, together with the description, explain principles of the examples.
FIG. 1 illustrates a functional block diagram of a device, in accordance with one or more embodiments of the disclosure.
FIG. 2 illustrates an exemplary switching regulator, in accordance with one or more embodiments of the disclosure.
FIG. 3 illustrates a simplified multi-level buck operation, in accordance with one or more embodiments of the disclosure.
FIG. 4 illustrates an exemplary output voltage loop, input voltage loop and input current loop, in accordance with one or more embodiments of the disclosure.
FIG. 5 illustrates exemplary PWM generators, in accordance with one or more embodiments of the disclosure.
FIG. 6 illustrates exemplary timing diagrams, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Many electronic devices capable of receiving power can require extra circuitry to perform additional functions associated with the primary function of outputting power. In some electronic devices, switching regulators maintaining a constant switching frequency under light load conditions can lead to inefficiencies due to switching losses, which become more significant relative to the power being delivered to a load. According, there is a need in the art for an improved electronic device.

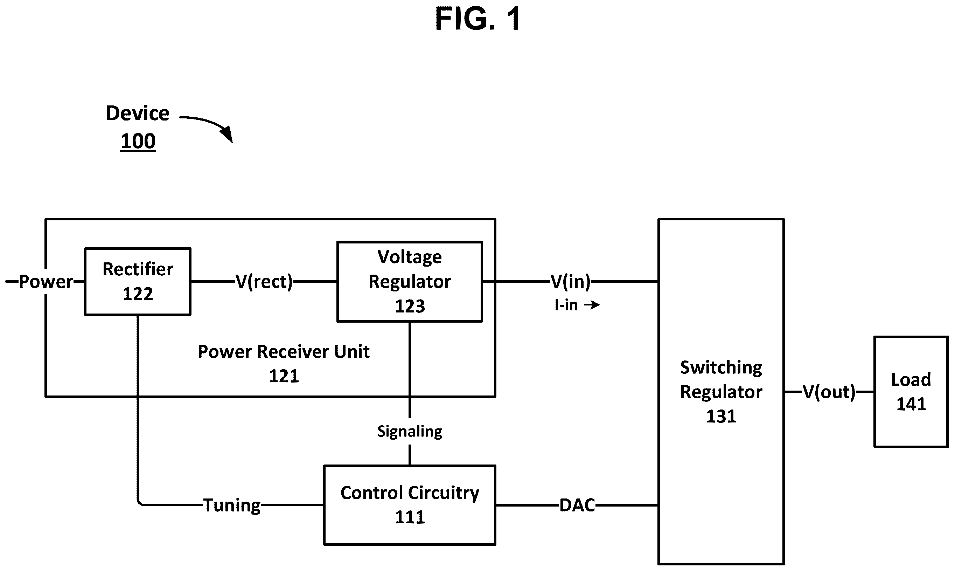

Referring to FIG. 1, a functional block diagram of device 100 according to exemplary embodiments is shown. Device 100 may include control circuitry 111, power receiver unit 121, switching regulator 131 and load 141. Load 141 is any device or component that may consume or store electrical power. Those skilled in the art will appreciate there may be additional components in device 100. In some examples, an integrated circuit chip may include power receiver unit 121. Another integrated circuit chip may include switching regulator 131.

Device 100 may be configured as any type of electrically-powered device that has computing capability. For example, device 100 may be configured as a mobile communication device including, but not limited to, a mobile phone, a smart phone, cell phone, or tablet. Device 100 may be configured as a wearable device, a smartwatch, a fitness tracker or a personal digital assistant (PDA). In some examples, device 100 may be found in apparatuses such as autonomous vehicles, robots and drones. In other examples, device 100 may be configured as a media device (e.g., media playing and/or recording device). Device 100 may include a portable music player, an audio device such as an audio recorder, an audio converter, an audio player, or a speaker (e.g., a Bluetooth-enabled speaker). In other instances, device 100 may include a video device such as a video display, a video recorder, a camera, or other video device. In another example, device 100 may be configured as, a driver assistance module in a vehicle, an emergency transponder, a pager, a satellite television receiver, a stereo receiver, a computer system, music player, laptop or tablet computer, home appliance, or virtually any other device. Device 100 may be configured as a computer (e.g., a laptop computer). In other examples, device 100 may be configured as a computing and/or entertainment device for a vehicle. Device 100 may be any portable electronic device that can be carried by or worn on a person.

Control circuitry 111 is electronic hardware implemented as any suitable processing circuitry. The processing circuitry may include, but not limited to at least one of a microcontroller, a microprocessor, a single processor, and a multiprocessor. Control circuitry 111 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Control circuitry 111 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals.

FIG. 1 illustrates an example power receiver unit 121 in which aspects of the present disclosure may be implemented. Components of power receiver unit 121 may include rectifier 122 and voltage regulator 123. Those skilled in the art will appreciate there may be additional components in power receiver unit 121.

In the example of FIG. 1, power may flow, wirelessly or by wire, into device 100. The power may be in the form of AC (alternating current) power and/or DC (direct current) power. Rectifier 122 is circuitry that may rectify the power into a rectified voltage V(rect). Rectified voltage V(rect) is a DC voltage. In some instances, control circuitry 111 may send a tuning instruction along wiring to rectifier 122. The tuning instruction may command tuning, by rectifier 122, to the center frequency of the power. Rectifier 122 may be a voltage source. In response to producing rectified voltage V(rect), rectifier 122 may transform the power into rectified voltage V(rect).

Voltage regulator 123 is circuitry that reduces or eliminates voltage fluctuations that may appear in rectified voltage V(rect). Voltage fluctuations are transients in the voltage level of a voltage. Transients may include voltage spikes, momentary increases and decreases of voltage, voltage ripple and/or other sudden uncontrolled transitions that may occur in the voltage. Control circuitry 111 may provide signaling that configures voltage regulator 123 to convert the rectified voltage V(rect) into an input voltage V(in). The input voltage V(in) is a DC voltage. An input current (I-in) may flow along with the input voltage V(in). In response to converting rectified voltage V(rect) into the input voltage V(in), voltage regulator 123 may maintain the input voltage V(in) at a constant voltage level despite any fluctuation in rectified voltage V(rect).

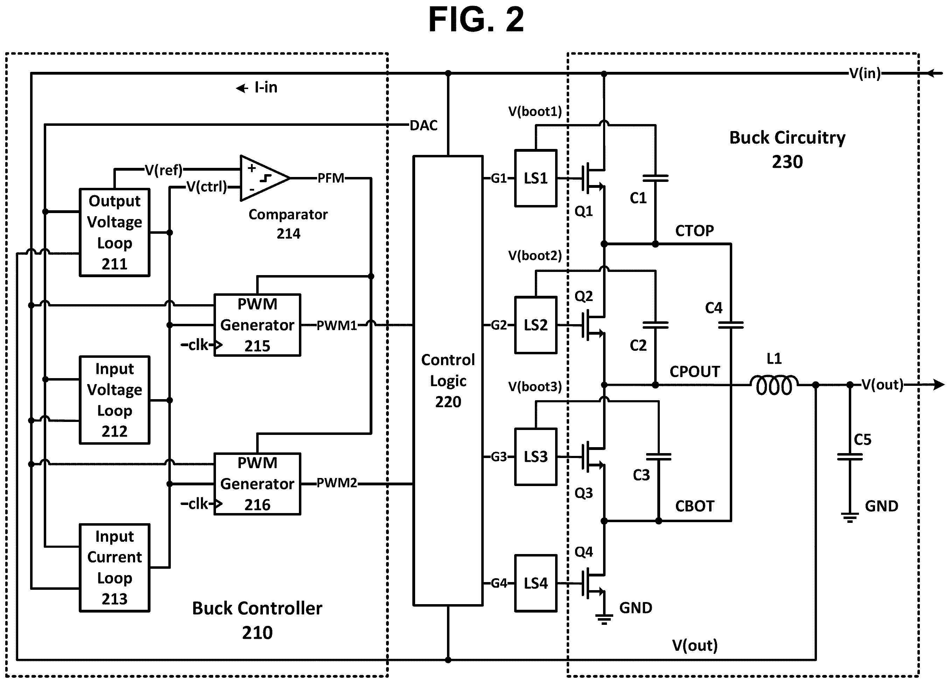

Referring to FIG. 2, an exemplary switching regulator 131 is illustrated. Switching regulator 131 may deliver multi-functional power regulation that can be pre-programmed depending on a functional application of switching regulator 131. For example, switching regulator 131 is circuitry that may condition the input voltage V(in). To condition the input voltage V(in), switching regulator 131 may operate as a multi-level buck controller, as will be explained in detail.

Included in switching regulator 131 are output voltage loop 211, input voltage loop 212, input current loop 213, comparator 214, PWM generators 215 and 216, control logic 217, level shifters LS1-LS4 and buck circuitry 218. Buck circuitry 218, also known as a step-down converter, is circuitry that may reduce a higher-level input voltage V(in) to a lower-level output voltage V(out) while concurrently increasing the current of the lower-level output voltage V(out) to an amount greater than the input current (I-in) associated with the higher-level input voltage V(in). Buck circuitry 218 may include switches Q1-Q4, capacitors C1-C5 and inductor L1. Those skilled in the art will appreciate there may be additional components in switching regulator 131.

Switches Q1-Q4 may be implemented as N-type metal-oxide-semiconductor (NMOS) transistors. For example, switches Q1-Q4 may each be an N-type laterally-diffused metal-oxide semiconductor (LDNMOS) transistor. Alternatively, any of the switches Q1-Q4 may be implemented as a Field Effect Transistor (FET), a bipolar transistor, a P-type metal-oxide-semiconductor (PMOS) transistor, or any other switching device.

Referring to capacitors C1-C3, boot capacitor C1 may store a voltage V(boot1), boot capacitor C2 may store a voltage V(boot2) and boot capacitor C3 may store a voltage V(boot3). Level shifter LS1 is connected in parallel with boot capacitor C1. Boot capacitor C1, level shifter LS1 and the drain of switch Q2 are coupled to the source of switch Q1. The gate of switch Q1 is coupled to level shifter LS1. Level shifter LS2 is connected in parallel with boot capacitor C2. The source of switch Q2 is coupled to boot capacitor C2, level shifter LS2 and the drain of switch Q3. The gate of switch Q2 is coupled to level shifter LS2. The gate of switch Q3 is coupled to level shifter LS3. Boot capacitor C3 is coupled to level shifter LS3 and the source of switch Q3. The drain of switch Q4 is coupled to the source of switch Q3. Level shifter LS4 is coupled to the gate of switch Q4.

Via node CTOP, a terminal of flying capacitor C4 may be coupled to the source of switch Q1 and the drain of switch Q2. The drain of switch Q1 may be coupled to the input voltage V(in). Via Node CPOUT, a terminal of inductor L1 may be coupled to the source of switch Q2 and the drain of switch Q3. Inductor L1 is an optional component that may be omitted in some instances. Via node CBOT, another terminal of flying capacitor C4 may be coupled to the source of switch Q3 and the drain of switch Q4. The source of switch Q4 and a terminal of shunt capacitor C5 may be coupled to ground. Another terminal of inductor L1 may be coupled to another terminal of shunt capacitor C5, on which output voltage V(out) may appear.

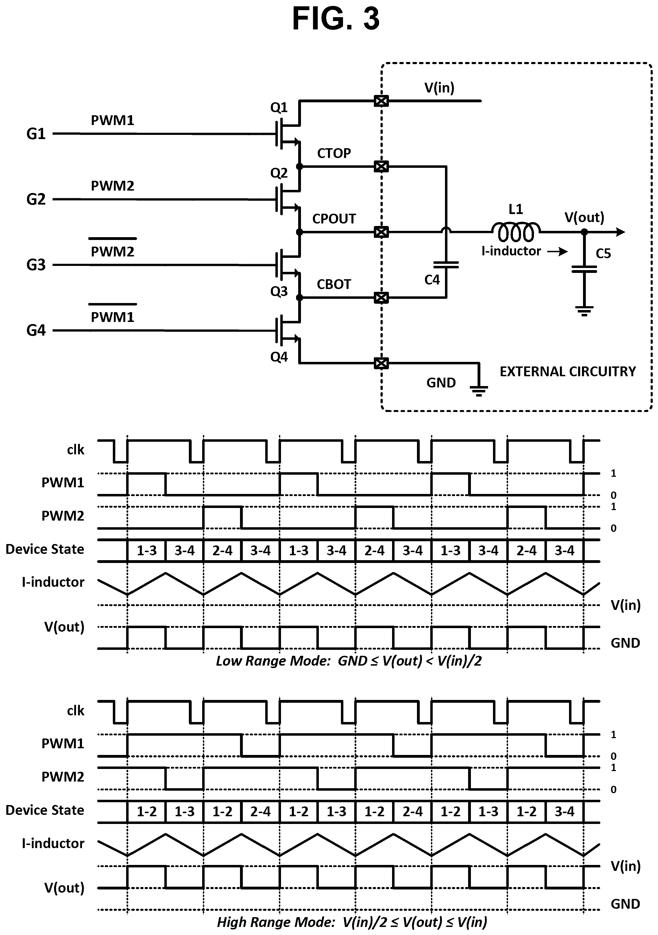

FIG. 3 illustrates a simplified buck operation for buck circuitry 218. Omission of level shifters LS1-LS4 and capacitors C1-C3 from FIG. 3 is solely for simplicity. The buck operation of FIG. 3 may include a low range mode and a high range mode. Switching regulator 131 may charge flying capacitor C4 to a voltage level of input voltage V(in)/2 during the multi-level buck operation. Control logic 217 may sample output voltage V(out) on the falling edge of clock (clk).

In response to output voltage V(out) being less than input voltage V(in)/2, control logic 217 may place switching regulator 131 into the low range mode. Inductor current (I-inductor) ramps up in response to signal PWM1 being logic 1 and also in response to signal PWM2 being logic 1 while switching regulator 131 is in the low range mode. Alternatively, control logic 217 may place switching regulator 131 into the high range mode in response to output voltage V(out) being equal to or greater than input voltage V(in)/2. Inductor current (I-inductor) ramps down in response to signal PWM1 being logic 0 and also in response to signal PWM2 being logic 0 while switching regulator 131 is in the high range mode.

Signal PWM1 and signal PWM2 may be pulse width modulated signals. PWM generator 215 may generate signal PWM1. Signal PWM1 may drive switch Q1 on gate line G1 and inverted signal PWM1 may drive switch Q4 on gate line G4. As an output from PWM generator 216, signal PWM2 may drive switch Q2 on gate line G2. Inverted signal PWM2 may drive switch Q3 on gate line G3.

In the example timing diagram of FIG. 3, signal PWM1 and signal PWM2 transition on the rising edge of clock (clk) and are interleaved 180° apart. Duty cycles for signals PWM1 and PWM2 may be proportional to control voltage V(ctrl) and inversely proportional to input voltage V(in). Device states indicate which of the switches Q1-Q4 are conductive, as shown in Table 1 below.

| TABLE 1 | | | | |
|---|---|---|---|---|
| Device State | Q1 | Q2 | Q3 | Q4 |
| 1, 3 | X | | X | |
| 3, 4 | | | X | X |
| 2, 4 | | X | | X |
| 3, 4 | | | X | X |
| | | | | |
| 1, 2 | X | X | | |
| 1, 3 | X | | X | |
| 1, 2 | X | X | | |
| 2, 4 | | X | | X |

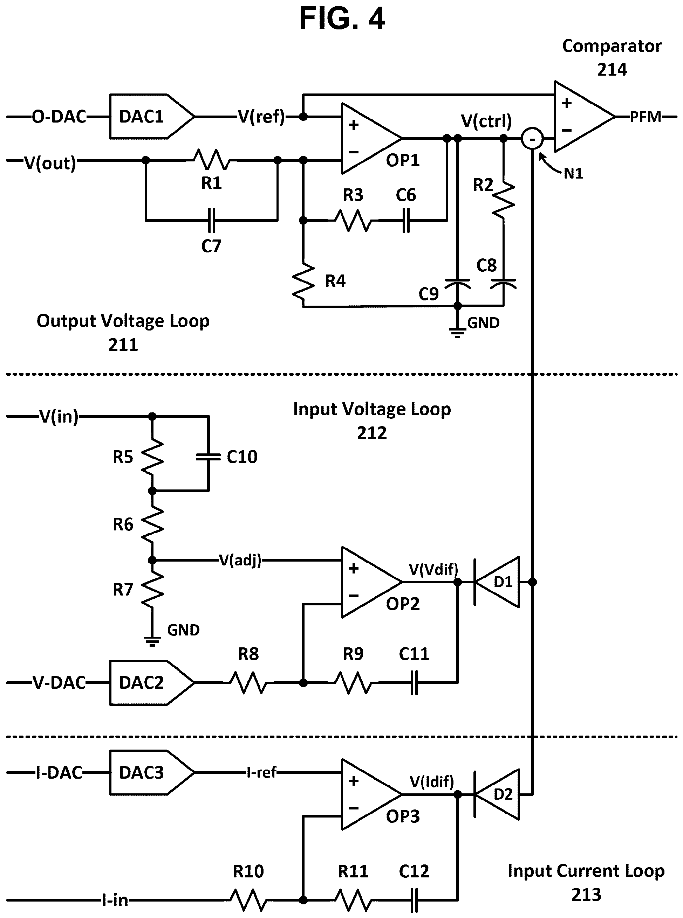

In some switching regulators, multiple control loops can attempt to maintain boundary conditions of input voltages, output voltages and currents. In many instances, however, contention between control loops in these switching regulators can be difficult stabilize in operation on a single control node. As a solution to contention between control loops in switching regulators, FIG. 4 illustrates an exemplary output voltage loop 211, an exemplary input voltage loop 212 and an exemplary input current loop 213.

Turning now to FIG. 4, output voltage loop 211 may include digital-to-analog converter DAC1 which receives, from control circuitry 111, O-DAC in the form of a digital word. O-DAC is a predetermined user setting that represents an output voltage setpoint for reference output voltage V(ref). DAC1 converts the output voltage setpoint from the digital word to a reference output voltage V(ref). Reference output voltage V(ref) is an analog voltage. The positive terminal of op amp OP1 may receive reference output voltage V(ref). Output voltage loop 211 may receive output voltage V(out) from an output of buck circuitry 218. The negative terminal of op amp OP1 may receive output voltage V(out) through resistor-capacitor filter R1/C7. Current-limiting resistor R4 may provide a path from the negative terminal of op amp OP1 to ground. A negative feedback path from the output of op amp OP1 to the negative terminal of op amp OP1 may exist through resistor R3 and capacitor C6. A resistor-capacitor filter R2/C8 at the output of op amp OP1 may exist. Also at the output of op amp OP1 may exist a capacitive filter C9 to ground. The positive terminal of comparator 214 may receive reference outputvoltage V(ref). The negative terminal of comparator 214 may receive control voltage V(ctrl) from the output of op amp OP1.

Control voltage V(ctrl) may be the voltage difference between reference output voltage V(ref) at the positive terminal of op amp OP1 and output voltage V(out) at the negative terminal of op amp OP1. In response to the reference output voltage V(ref) being equal to output voltage V(out), control voltage V(ctrl) is a zero voltage level. Control voltage V(ctrl) is a positive voltage in response to reference output voltage V(ref) being greater than output voltage V(out). Output voltage loop 211 may pull up control voltage V(ctrl) in response to reference output voltage V(ref) being greater than output voltage V(out). In response to reference output voltage V(ref) being less than output voltage V(out), control voltage V(ctrl) is a negative voltage. Output voltage loop 211 may pull down control voltage V(ctrl) in response to reference output voltage V(ref) being less than output voltage V(out).

Input voltage loop 212 may include a resistor-capacitor filter R5/C10 and a voltage divider R6/R7. The positive terminal of op amp OP2 may receive adjusted input voltage V(adj) from the voltage divider R6/R7. Input voltage loop 212 may include digital-to-analog converter DAC2 which receives, from control circuitry 111, V-DAC in the form of a digital word. V-DAC is a predetermined user setting that represents an input voltage setpoint for adjusted input voltage V(adj). DAC2 converts the input voltage setpoint from the digital word to a reference input voltage. The reference input voltage is an analog voltage. Through current limiting resistor R8, the negative terminal of op amp OP2 may receive the analog reference value for adjusted input voltage V(adj). A negative feedback path from the output of op amp OP2 to the negative terminal of op amp OP2 may exist through resistor R9 and capacitor C11.

An input voltage loop differential voltage V(Vdif) may appear at the output terminal of op amp OP2. The input voltage loop differential voltage V(Vdif) is the voltage difference between the adjusted input voltage V(adj) at the positive terminal of op amp OP2 and the analog reference value for adjusted input voltage V(adj) at the negative terminal of op amp OP2. In response to adjusted input voltage V(adj) being equal to the reference input voltage, the input voltage loop differential voltage V(Vdif) is a zero voltage level. The input voltage loop differential voltage V(Vdif) is a positive voltage in response to adjusted input voltage V(adj) being greater than the reference input voltage. In response to adjusted input voltage V(adj) being less than the reference input voltage, the input voltage loop differential voltage V(Vdif) is a negative voltage.

A reverse-biased diode D1 may cause input voltage loop 212 to perform as a current sink in response to the input voltage loop differential voltage V(Vdif) being a negative value. While performing as a current sink, input voltage loop 212 may pull down control voltage V(ctrl) to reduce control voltage V(ctrl) by an amount proportional to the input voltage loop differential voltage V(Vdif). Those skilled in the art will appreciate there may be more than one input voltage loop 212 in switching regulator 131.

Input current loop 213 may include digital-to-analog converter DAC3. From control circuitry 111, digital-to-analog converter DAC3 may receive I-DAC in the form of a digital word. I-DAC is a predetermined user setting that represents an input current setpoint for the input current (I-in). DAC3 converts the input current setpoint from the digital word to an input current reference (I-ref). The input current reference (I-ref) is an analog current.

The positive terminal of op amp OP3 may receive the input current reference (I-ref). The negative terminal of op amp OP3 may receive, through current limiting resistor R10, a voltage representing the input current (I-in). A negative feedback path from the output of op amp OP3 to the negative terminal of op amp OP3 may exist through resistor R11 and capacitor C12.

An input current loop differential voltage V(Idif) may appear at the output terminal of op amp OP3. The input current loop differential voltage V(Idif) is the voltage difference between input current reference (I-ref) at the positive terminal of op amp OP3 and the voltage representing the input current (I-in) at the negative terminal of op amp OP3. In response to the input current reference being equal to the voltage representing the input current (I-in), the input current loop differential voltage V(Idif) is a zero voltage level. The input current loop differential voltage V(Idif) is a positive voltage in response to the input current reference being greater than the voltage representing the input current (I-in). In response to the input current reference being less than the voltage representing the input current (I-in), the input current loop differential voltage V(Idif) is a negative voltage.

A reverse-biased diode D2 may cause input current loop 213 to perform as a current sink in response to the input current loop differential voltage V(Idif) being a negative value. While performing as a current sink, input current loop 213 may pull down control voltage V(ctrl) to reduce control voltage V(ctrl) by an amount proportional to the input current loop differential voltage V(Idif). Those skilled in the art will appreciate there may be more than one input current loop 213 in switching regulator 131.

Input voltage loop 212 may perform as the current sink in cases where the amount of the input voltage loop differential voltage V(Vdif) is more negative than the amount of the input current loop differential voltage V(Idif). Alternatively, in cases where the amount of the input current loop differential voltage V(Idif) is more negative than the amount of the input voltage loop differential voltage V(Vdif), input current loop 213 may perform as the current sink. The current sinks of input voltage loop 212 and input current loop 213 combined with control voltage V(ctrl) results in a condition where control voltage V(ctrl), the input voltage loop differential voltage V(Vdif) or the input current loop differential voltage V(Idif) having the greatest variance from its respective setpoint value will have the largest influence on the value of signal PFM at the output of comparator 214.

In accordance with one or more embodiments of the disclosure, operational conflicts between output voltage loop 211, input voltage loop 212 and input current loop 213 of switching regulator 131 are eliminated by implementing a topology that includes output voltage loop 211, input voltage loop 212 and input current loop 213 configured to each regulate control voltage V(ctrl) at a single control node (N1).

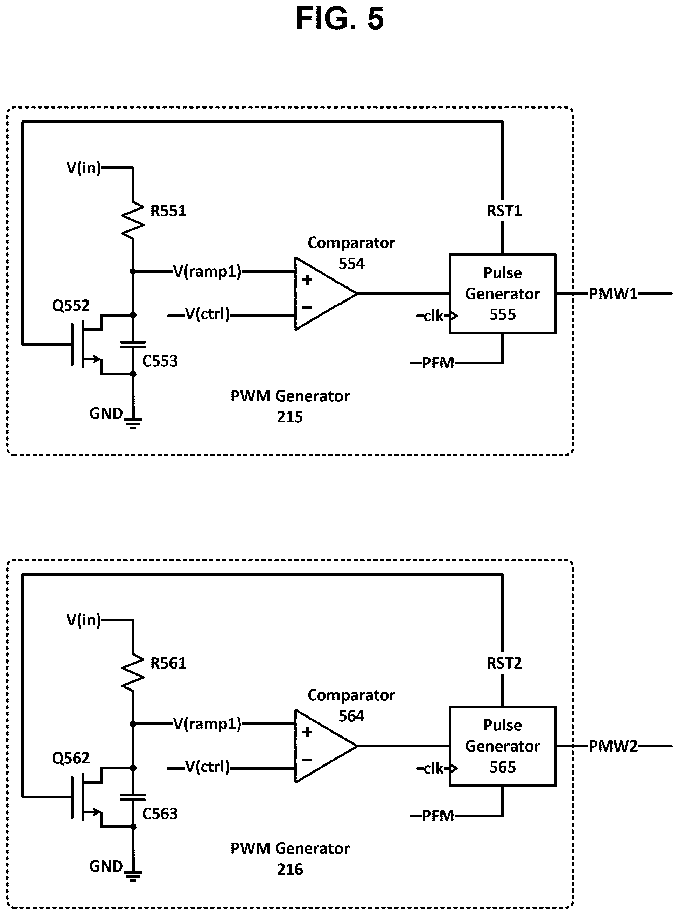

Referring to FIG. 5, exemplary PWM generators 215 and 216 are illustrated. Signal PWM1 and signal PWM2 may be pulse width modulated signals. PWM generator 215 may generate signal PWM1. PWM generator 216 may generate signal PWM2. In some configurations, PWM generator 215 may include resistor R551, switch Q552, capacitor C553, comparator 554 and pulse generator 555. PWM generator 216 may include resistor R561, switch Q562, capacitor C563, comparator 564 and pulse generator 565. Switches Q551 and Q561 may be implemented as N-type metal-oxide-semiconductor (NMOS) transistors. For example, switches Q551 and Q561 may each be an N-type laterally-diffused metal-oxide semiconductor (LDNMOS) transistor. Alternatively, any of the switches Q551 and Q561 may be implemented as a Field Effect Transistor (FET), a bipolar transistor, a P-type metal-oxide-semiconductor (PMOS) transistor, or any other switching device. Those skilled in the art will appreciate there may be additional components in PWM generators 215 and 216.

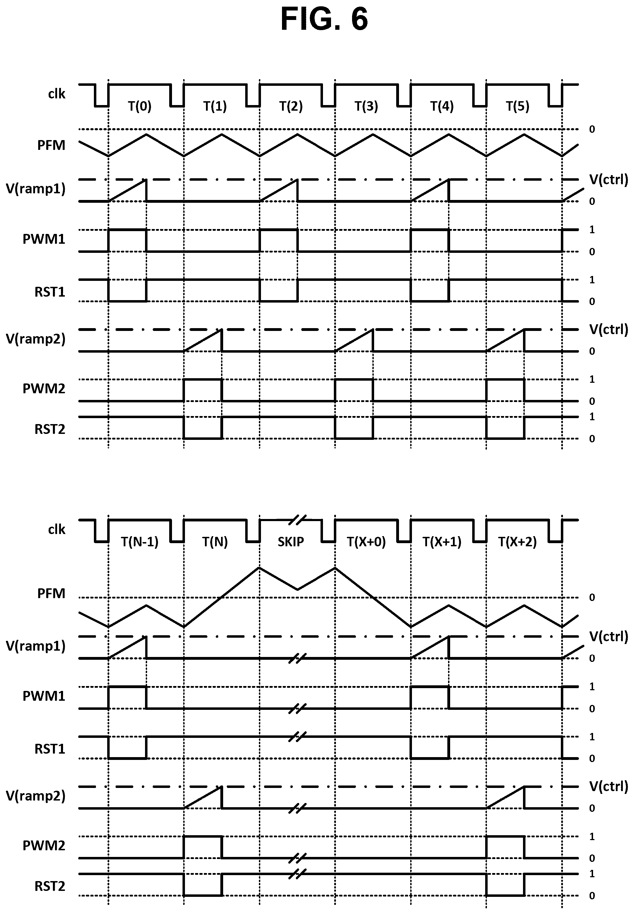

FIG. 6 illustrates timing diagrams while switching regulator 131 is in the low range mode. The switching frequency for pulses PWM1 and PWM2 is typically recurring in the example of FIG. 6. Pulses PWM1 and PWM2 transition from one logic level to another logic level on the rising edge of clock (clk). Transitions of pulses PWM1 and PWM2 are interleaved apart by a cycle of clock (clk).

As will be explained in detail, pulse generators 555 and 565 in FIG. 5 may adjust duty cycles for pulses PWM1 and PWM2 to regulate output voltage V(out) according to the demand of load 141. For example, duty cycles for pulses PWM1 and PWM2 may be proportional to control voltage V(ctrl). As an illustration, control voltage V(ctrl) may be the voltage difference between reference output voltage V(ref) at the positive terminal of op amp OP1 and output voltage V(out) at the negative terminal of op amp OP1 as illustrated in FIG. 4. A resistor-capacitor filter R551/C553 at the positive input of comparator 554 may exist in PWM generator 215. Similarly, a resistor-capacitor filter R561/C563 at the positive input of comparator 564 may exist in PWM generator 216. The negative terminal of comparator 554 and the negative terminal of comparator 564 may receive control voltage V(ctrl).

In PWM generator 215, resistor R551 may receive the input voltage V(in). Pulse RST1 is a signal from pulse generator 555 that is fed back onto the gate of switch Q552. In response to the rising edge of clock (clk), pulse generator 555 may cause switch Q552 to become non-conductive by transitioning pulse RST1. As a result of switch Q552 being non-conductive, capacitor 553 may store the input voltage V(in) in capacitor 553 to generate ramp voltage V(ramp1) at the output of Resistor-capacitor filter R551/C553. In response to ramp voltage V(ramp1) becoming equal to or greater than control voltage V(ctrl), pulse generator 555 may cause switch Q552 to become conductive by transitioning pulse RST1. As a result of switch Q552 being conductive, switch Q552 may discharge ramp voltage V(ramp1) from capacitor 553 to ground. Pulse generator 555 may also transition pulse PWM1 in response to ramp voltage V(ramp1) becoming equal to or greater than control voltage V(ctrl).

In PWM generator 216, resistor R561 may also receive the input voltage V(in). Pulse RST2 is a signal from pulse generator 565 that is fed back onto the gate of switch Q562. In response to the rising edge of clock (clk), pulse generator 565 may cause switch Q562 to become non-conductive by transitioning pulse RST2. As a result of switch Q562 being non-conductive, capacitor 563 may store the input voltage V(in) in capacitor 563 to generate ramp voltage V(ramp2) at the output of Resistor-capacitor filter R561/C563. In response to ramp voltage V(ramp2) becoming equal to or greater than control voltage V(ctrl), pulse generator 565 may cause switch Q562 to become conductive by transitioning pulse RST2. As a result of switch Q562 being conductive, switch Q562 may discharge ramp voltage V(ramp2) from capacitor 563 to ground. Pulse generator 565 may also transition pulse PWM2 in response to ramp voltage V(ramp2) becoming equal to or greater than control voltage V(ctrl).

PWM generators 215 and 216 may receive signal PFM from the output terminal of comparator 214. Signal PFM may be the voltage difference between reference output voltage V(ref) at the positive terminal of comparator 214 and control voltage V(ctrl) at the negative terminal of comparator 214, as described above referring to the example of FIG. 4. Signal PFM is a non-zero voltage in cases where a voltage difference exists between control voltage V(ctrl) and reference output voltage V(ref).

In some instances where signal PFM is a non-zero voltage, PWM generators 215 and 216 may transition pulses PWM1 and PWM2. For example, signal PFM may become a negative voltage as a result of control voltage V(ctrl) being greater than reference output voltage V(ref). In cases where signal PFM is a negative voltage, PWM generators 215 and 216 may transition pulses PWM1 and PWM2. Time periods T(0) through T(5), T(N-1), T(X+1) and T(X+2) in FIG. 6 illustrate examples where signal PFM is a negative voltage.

In other instances where signal PFM is a non-zero voltage, PWM generators 215 and 216 may inhibit transition pulses PWM1 and PWM2. For example, signal PFM may become a positive voltage as a result of control voltage V(ctrl) being less than reference output voltage V(ref). Time period T(N) in FIG. 6 may illustrate an example where signal PFM transitions from a negative voltage to a positive voltage. One or more time periods "SKIP" in FIG. 6 may illustrate an example where signal PFM is a positive voltage.

In cases where signal PFM is a positive voltage, PWM generator 215 may inhibit transitions of pulse PWM1 and PWM generator 216 may inhibit transitions of pulse PWM2. Time period T(X+0) in FIG. 6 may illustrate an example where signal PFM transitions from a positive voltage to a negative voltage. Flying capacitor C4 and inductor L1 in the example of FIG. 2 may maintain output voltage V(out) at a voltage level during the time period that PWM generators 215 and 216 inhibit transitions of pulse PWM1 and PWM2. As a consequence of PWM generators 215 and 216 inhibiting transitions of pulse PWM1 and PWM2 where signal PFM is a positive voltage, PWM generators 215 and 216 may reduce the switching losses in switching regulator 131.

In cases where signal PFM again becomes a negative voltage after being a positive voltage, PWM generators 215 and 216 may resume transitioning of pulses PWM1 and PWM2 at every cycle of clock (clk). Time period T(X+1) in FIG. 6 may illustrate an example where signal PFM again becomes a negative voltage after being a positive voltage and PWM generators 215 and 216 resume transitioning of pulses PWM1 and PWM2 at every cycle of clock (clk).

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate liste d elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

## Claims

1. A switching regulator comprising:
control logic configured to:
output, to a plurality of switches, pulses that sequence a transitioning of the switches; and
a buck controller configured to:
compare, to obtain a control voltage, a reference output voltage with an output voltage, and
inhibit, in response to a voltage difference existing between the control voltage and the reference output voltage, one or more of the pulses from transitioning.

2. The switching regulator according to claim 1, wherein the buck controller is configured to generate the pulses,
and/or
wherein the buck controller is configured to compare the reference output voltage with the control voltage.

3. The switching regulator of one of the previous claims, wherein the buck controller is configure d to convert, into the reference output voltage, a digital word that represents a setpoint for the reference output voltage.

4. The switching regulator of one of the previous claims, wherein the buck controller is configured to transition the pulses on an edge of a clock.

5. The switching regulator according to claim 4, wherein the buck controller is configure d to generate a ramp voltage that transitions the pulses,
and/or
wherein the buck controller is configured to inhibit, for at least one cycle of the clock in response to the voltage difference existing, the one or more of the pulses from transitioning.

6. The switching regulator of one of the previous claims, wherein a first one of the pulses is out of phase from a second one of the pulses.

7. The switching regulator according to claim 6, wherein the first one of the pulses is inverted from a third one of the pulses,
in particular,
wherein the second one of the pulses is inverted from a fourth one of the pulses.

8. The switching regulator of one of the previous claims, wherein a duty cycle for the pulses is proportional to the control voltage.

9. The switching regulator of one of the previous claims, wherein the buck controller is configured to inhibit the one or more of the pulses from transitioning in response to the control voltage being greater than the reference output voltage,
and/or
wherein the buck controller is configured to permit transitioning of the one or more of the pulses in response to the control voltage being less than or equal to the reference output voltage.

10. The switching regulator of one of the previous claims, wherein the control voltage is a positive voltage in response to the reference output voltage being greater than the output voltage.

11. The switching regulator of one of the previous claims, wherein the control voltage is a negative voltage in response to the reference output voltage being less than the output voltage.

12. The switching regulator of one of the previous claims, further comprising:
buck circuitry configured to:
sequence, to decrease an input voltage to the output voltage, the transitioning of the switches between a conductive state and a non-conductive state.

13. The switching regulator according to claim 122, wherein the buck circuitry is configured to maintain the output voltage at a voltage level in response to the control logic inhibiting the one or more of the pulses from transitioning,
and/or
wherein a duty cycle for the pulses is inversely proportional to the input voltage.

14. A device comprising:
the switching regulator according to claim 122; and
a power receiver unit configured to convert power into the input voltage.

15. The device according to claim 144, wherein the power receiver unit is configured to wirelessly receive the power.
